# EUROPÄISCHE PATENTSCHRIFT

(11) **EP 3 966 535 B1**
(45) Veröffentlichungstag und Bekanntmachung des Hinweises auf die Patenterteilung: **13.12.2023**
(21) Anmeldenummer: 20720842.2
(22) Anmeldetag: 29.04.2020
(51) Int. Cl.: G01G 19/02, G01G 3/13

(54) **AUFNEHMERANORDNUNG**
SENSOR ASSEMBLY
ENSEMBLE DE CAPTEURS

(30) Priorität: 07.05.2019 EP 19172915
(43) Veröffentlichungstag der Anmeldung: 16.03.2022
(73) Patentinhaber: Kistler Holding AG, 8408 Winterthur ZH (CH)
(72) Erfinder: PFLUGER, Kim, 8404 Winterthur (CH)
(86) Internationale Anmeldenummer: PCT/EP2020/061871
(87) Internationale Veröffentlichungsnummer: WO 2020/225051

(56) Entgegenhaltungen:
- EP-A1- 0 654 654
- WO-A1-2018/114821

## Beschreibung

### Technisches Gebiet

Die Erfindung betrifft eine Aufnehmeranordnung, welche in eine Fahrbahn einbaubar ist und welche im eingebauten Zustand eine auf die Fahrbahn ausgeübte Gewichtskraft erfasst nach dem Oberbegriff des unabhängigen Anspruchs.

### Stand der Technik

Fahrzeuge fahren auf einer Fahrbahn und üben dabei eine Gewichtskraft auf die Fahrbahn aus. Unter Gewichtskraft wird dabei jene Kraft verstanden, die das Fahrzeug in Richtung des Schwerefelds der Erde auf die Fahrbahn ausübt. Üblicherweise wird die Gewichtskraft durch ein Rad des Fahrzeuges auf die Fahrbahn ausgeübt. Im Folgenden wird eine Fahrbahnoberfläche beschrieben, welche senkrecht zum Schwerefeld der Erde angeordnet ist. Die Beschreibung ist jedoch ohne Weiteres auf eine zum Schwerefeld der Erde geneigte Fahrbahn anwendbar.

Um eine Beschädigung der Fahrbahn zu vermeiden und um die Sicherheit zu erhöhen, erfolgt oftmals eine Überwachung von Anzahl, Radlast, Achslast, Gesamtgewicht, Reifendruck der fahrenden Fahrzeuge. Eine in der Fahrbahn angeordnete Aufnehmeranordnung erfasst dazu die Gewichtskraft jedes die Aufnehmeranordnung überfahrenden Fahrzeugs. Die Gewichtskraft wird dabei von einer in der Aufnehmeranordnung angeordneten Kraftsensoranordnung auch dann zuverlässig erfasst, wenn das Fahrzeug mit normaler Reisegeschwindigkeit die Aufnehmeranordnung überfährt.

Die Schrift EP0654654B1 zeigt eine solche Aufnehmeranordnung zum Einbau in eine Fahrbahn. Die Aufnehmeranordnung ist in einer Nut in der Fahrbahn angeordnet und mit einer Vergussmasse vergossen. Die Aufnehmeranordnung ist als Hohlprofil entlang einer Längsachse ausgebildet. In einem, durch ein Rohrteil des Hohlprofils gebildeten, Hohlraum des Hohlprofils ist eine Kraftsensoranordnung angeordnet, welche im mechanischen Kontakt mit dem Hohlprofil ist. Eine auf das Hohlprofil wirkende Kraft wird durch ein plattenförmiges Krafteinleitelement zu der Kraftsensoranordnung geleitet. Die Aufnehmeranordnung nach dem Stand der Technik EP0654654B1 weist zudem zwei Isolierelemente auf, welche seitlich neben einem Rohrteil angeordnet sind. Diese Isolierelemente vermindern einen Nebenkraftschluss. So wird die auf die Aufnehmeranordnung wirkende Kraft nicht ausschliesslich durch die Kraftsensoranordnung geleitet, sondern zu einem Teil ebenfalls durch die Wandung des Rohrteils und durch die neben dem Rohrteil angeordneten Isolierelemente. Das Material der Isolierelemente weist ein niedrigeres Elastizitätsmodul auf als die umliegende Vergussmasse und verringert daher den Nebenkraftschluss im Vergleich zu einem Rohrteil, das direkt von der Vergussmasse eingeschlossen ist. Zusätzlich vermindern die Isolierelemente einen störenden Einfluss seitlich auf das Hohlprofil wirkender Kräfte. Solche Kräfte, auch Rollkräfte genannt, gehen von einer Krafteinwirkung durch ein Fahrzeug auf die Fahrbahn und einer daraus resultierenden Deflexion der Fahrbahn aus. Die Deflexion der Fahrbahn bewirkt eine Rollkraft, welche dem Fahrzeug in der Fahrbahn vorauseilt und nacheilt. Trifft die Rollkraft seitlich auf das Hohlprofil, so verfälscht es die Erfassung der Gewichtskraft durch die Kraftsensoranordnung.

WO2018114821A1 offenbart eine Aufnehmeranordnung zum Einbringen in eine Fahrbahn mit einem ähnlichen Aufbau zur EP0654654A1. Ein aussenseitig am Hohlprofil angeordnetes Isolierelement isoliert die Aufnehmeranordnung gegen seitlich wirkende Rollkraft.

Eine Kraftsensoranordnung ist eine Anordnung mindestens eines Kraftsensors entlang der Längsachse des Hohlprofils. Eine Kraftsensoranordnung ist eingerichtet eine an einem Punkt entlang der Längsachse der Aufnehmeranordnung auf das Krafteinleitelement wirkende Kraft zu erfassen.

Die Isolierelemente werden üblicherweise für eine einfachere Installation der Aufnehmeranordnung in der Fahrbahn mit dem Hohlprofil verklebt, damit es zu keinem Verrutschen der Isolierelemente gegenüber dem Hohlprofil kommt. Nachteilig ist hierbei, dass ein trocknen des Klebstoffes viel Zeit in Anspruch nimmt und so die Produktion der Aufnehmeranordnung verteuert. Zudem kann sich ein nicht gleichmässig über die Länge des Hohlprofils aufgetragener Klebstoff negativ auf den Nebenkraftschluss auswirken, da der Klebstoff eine lokalisierte Versteifung darstellt. Dadurch verringert sich die Messgenauigkeit der Aufnehmeranordnung.

Wird auf den Klebstoff verzichtet, so müssen die Isolierelemente von einer Behelfskonstruktion während des Einbaus der Aufnehmeranordnung in die Fahrbahn fixiert werden, um ein verrutschen zu verhindern. Das Ausgiessen des letzten Teils der Nut durch Vergussmasse kann erst erfolgen, wenn ein erster Teil der Vergussmasse soweit gehärtet ist dass die Behelfskonstruktion entfernt werden kann und die Isolierelemente durch den ersten Teil der Vergussmasse fixiert sind. Dies verkompliziert den Einbau und verlängert die Zeit, in der die Fahrbahn für den Einbau für Fahrzeuge abgesperrt werden muss.

Eine erste Aufgabe der vorliegenden Erfindung ist es, die Isolierelemente schneller und kostengünstiger am Hohlprofil der Aufnehmeranordnung zu fixieren und dadurch Produktionskosten zu senken und den Einbau des Aufnehmers in die Fahrbahn zu vereinfachen.

Eine weitere Aufgabe der vorliegenden Erfindung ist es, die Messgenauigkeit der Aufnehmeranordnung zu verbessern.

### Darstellung der Erfindung

Zumindest eine dieser Aufgaben wird durch die Merkmale des unabhängigen Anspruchs gelöst.
Die Erfindung nach Anspruch 1 betrifft eine Aufnehmeranordnung zum Einbringen in eine Fahrbahn; welche Aufnehmeranordnung ein entlang einer Längsachse ausgebildetes Hohlprofil, eine Kraftsensoranordnung und mindestens ein aussenseitig am Hohlprofil angeordnetes Isolierelement aufweist; welches Isolierelement die Aufnehmeranordnung im eingebautem Zustand gegen eine seitlich wirkende Rollkraft isoliert; wobei das Hohlprofil einen Hohlraum aufweist und die Kraftsensoranordnung im Hohlraum angeordnet ist; welche Kraftsensoranordnung im eingebauten Zustand der Aufnehmeranordnung eingerichtet ist eine auf das Hohlprofil ausgeübte Gewichtskraft zu erfassen; wobei das Isolierelement formschlüssig mit dem Hohlprofil verbunden ist.

Die Formschlüssige Verbindung des Isolierelements mit dem Hohlprofil hat den Vorteil, dass das Isolierelement gegenüber dem Hohlprofil während des Einbaus der Aufnehmeranordnung in die Fahrbahn fixiert ist. Es ist kein Klebstoff notwendig, um das Isolierelements gegenüber dem Hohlprofil für den Einbau der Aufnehmeranordnung in die Fahrbahn zu fixieren. Ebenso sind keine Behelfskonstruktionen zur Fixierung des Isolierelements gegen das Hohlprofil während des Einbaus der Aufnehmeranordnung in die Fahrbahn notwendig.

### Kurze Beschreibung der Zeichnungen

Im Folgenden wird die Erfindung beispielhaft unter Beizug der Figuren näher erklärt. Es zeigen
- Fig. 1: eine schematische Teilansicht einer Fahrbahn mit einer Ausführungsform der in der Fahrbahn angeordneten Aufnehmeranordnung,
- Fig. 2: eine Ansicht nach Fig. 1, wobei zusätzlich ein Rad dargestellt ist,
- Fig. 3: eine schematische Teilansicht einer Ausführungsform der Aufnehmeranordnung,
- Fig. 4: eine weitere schematische Teilansicht einer Ausführungsform der Aufnehmeranordnung,
- Fig. 5: eine schematische Teilansicht einer Ausführungsform der Aufnehmeranordnung,
- Fig. 6: eine schematische Teilansicht einer Ausführungsform der Aufnehmeranordnung,
- Fig. 7: eine schematische Teilansicht einer Ausführungsform der Aufnehmeranordnung,
- Fig. 8: eine schematische Teilansicht einer Ausführungsform der Aufnehmeranordnung,
- Fig. 9: eine schematische Teilansicht einer Ausführungsform der Aufnehmeranordnung,
- Fig. 10: eine schematische Teilansicht einer Fahrbahn mit in die Fahrbahn eingefügten Aufnehmeranordnungen.

### Wege zur Ausführung der Erfindung

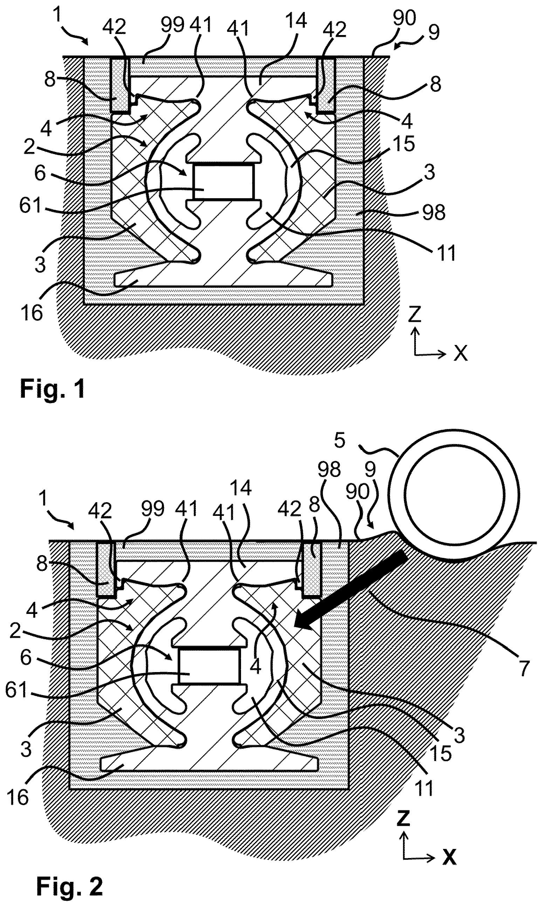

Fig. 1 zeigt eine schematische Teilansicht einer Fahrbahn 9 mit einer Ausführungsform der in der Fahrbahn 9 angeordneten Aufnehmeranordnung 1. Die Aufnehmeranordnung 1 ist in einer Schnittansicht senkrecht zur Längsachse Y dargestellt. In der dargestellten Ausführungsform weist das Hohlprofil 2 ein plattenförmige Krafteinleitelement 14 und ein plattenförmiges Verankerungselement 16 auf. Die beiden grösseren Ausdehnungen des Krafteinleitelements 14 und des Verankerungselements 16 sind entlang der Längsachse Y und entlang einer Querachse X ausgeführt. Die Stärke des Krafteinleitelements 14 und des Verankerungselements 16 ist entlang einer Vertikalachse Z ausgeführt, welche Vertikalachse Z senkrecht auf den beiden grösseren Ausdehnungsrichtungen der Platten steht. Längsachse Y, Querachse X und Vertikalachse Z bilden ein Orthogonalsystem. Ist die Aufnehmeranordnung 1 in der Fahrbahn 9 eingebaut, so steht die Vertikalachse Z weitgehend senkrecht zur Fahrbahnoberfläche 90 während Querachse X und Längsachse Y weitgehend parallel zur Fahrbahnoberfläche 90 ausgerichtet sind. Seitlich bezüglich der Querachse X ist mindestens ein Isolierelement 3 am Hohlprofil 2 angeordnet.

Die Aufnehmeranordnung 1 ist üblicherweise mit einer Vergussmasse 98 in die Fahrbahn 9 eingefügt, wobei die Vergussmasse 98 unterhalb bezügliche der Vertikalachse Z und seitlich bezüglich der Querachse X die Aufnehmeranordnung 1 umgibt. Üblicherweise ist beiderseits neben dem Krafteinleitelement 14 bezüglich der Querachse X ein Entkopplungsstreifen 8 angeordnet, welcher sich über die Länge des Isolierelements 3 entlang der Längsachse Y erstreckt und sich in Vertikalrichtung Z vom Isolierelement 3 aus den Krafteinleitelement 14 seitlich berührend bis zur Fahrbahnoberfläche 90 erstreckt. Üblicherweise ist das Krafteinleitelement 14 auf seiner Oberseite bezüglich der Vertikalachse Z mit einer oberen Vergussmasse 99 versehen. Die obere Vergussmasse 99 und die einbettende Vergussmasse 98 sind durch den Entkopplungsstreifen 8 voneinander getrennt und mechanisch entkoppelt.

Ein Entkopplungsstreifen besteht vorteilhafterweise aus Gummi, Kautschuk, expandiertem Polyethylene, expandiertem Polystyrol, extrudiertem Polystyrol, expandiertem Ethylen-Propylen-Dien-Kautschuk, expandiertem Silikon, oder expandiertem Polypropylen.

Die Aufnehmeranordnung 1 weist eine Ausdehnung entlang der Längsachse Y zwischen 500 mm und 5000 mm auf; und die Ausdehnung der Aufnehmeranordnung 1 entlang der Querachse X beträgt zwischen 20 mm und 100 mm; und die Ausdehnung der Aufnehmeranordnung 1 entlang der Vertikalachse Z beträgt zwischen 20 mm und 150 mm.

In einer bevorzugten Ausführungsform der Aufnehmeranordnung 1 weist das Hohlprofil 2 ein Rohrteil 15 auf, welches Rohrteil 15 zwischen dem Krafteinleitelement 14 und dem Verankerungselement 16 angeordnet ist. Das Rohrteil 15 umschliesst den Hohlraum 11 des Hohlprofils 2. Das Verankerungselement 16 und das Rohrteil 15 und das Krafteinleitelement 14 sind einstückig ausgeführt. Das Rohrteil 15 ist mit dem Krafteinleitelement 14 und mit dem Verankerungselement 16 einstückig verbunden.

Im Hohlraum 11 des Hohlprofils 2 ist die Kraftsensoranordnung 6 im mechanischen Kontakt mit dem Hohlprofil 2 angeordnet. Eine auf das plattenförmige Krafteinleitelement 14 des Hohlprofils 2 wirkende Kraft wird hauptsächlich durch die Kraftsensoranordnung 6 geleitet. Die Kraftsensoranordnung 6 bildet daher einen Krafthauptschluss, über den die auf das Hohlprofil 2 wirkende Kraft hauptsächlich geleitet ist. Von der Kraftsensoranordnung 6 wird die Kraft über das Verankerungselement 16 in den Untergrund geleitet. Ein Teil der Kraft wird durch ein Rohrteil 15 des Hohlprofils 2 und durch die Isolierelemente 3 über das Verankerungselement 16 in den Untergrund geleitet. Rohrteil 15 und Isolierelemente 3 bilden einen Nebenkraftschluss.

Eine Kraftsensoranordnung 6 ist beispielsweise ein entlang der Längsachse Y lang ausgebildeter kraftsensitiver Lichtleiter oder ein entlang der Längsachse Y lang ausgebildetes piezoresistives Element oder ein entlang der Längsachse Y lang ausgebildeter Dehnmessstreifen (DMS) oder eine Anzahl diskreter und voneinander beabstandet angeordneter Kraftsensoren, wie beispielsweise piezoelektrische Kraftsensoren, piezoresistive Kraftsensoren, DMS, kapazitive Kraftsensoren oder andere Sensoren die dazu ausgelegt sind eine Kraft zu ermitteln.

In einer bevorzugten Ausführungsform ist die Kraftsensoranordnung 6 im Hohlprofil 2 unter einer Vorspannkraft angeordnet, wobei die Vorspannkraft durch die Wandungen des Rohrteils 15 auf die Kraftsensoranordnung 6 ausgeübt ist. Dies hat den Vorteil eines gut definierten mechanischen Kontaktes zwischen Hohlprofil 2 und Kraftsensoranordnung 6.

Fig. 2 zeigt die Aufnehmeranordnung 1 aus Fig. 1, wobei in Fig. 2 die Wirkung einer Rollkraft 7 durch den seitlichen schwarzen Pfeil verdeutlicht wird. Eine seitlich auf das Hohlprofil 2 wirkende Rollkraft 7 wirkt sich auf den mechanischen Kontakt zwischen Hohlprofil 2 und Kraftsensoranordnung 6 aus und stört daher eine Erfassung der auf die Aufnehmeranordnung 1 wirkenden Gewichtskraft. Der störende Einfluss auf die Erfassung der Gewichtskraft wird durch das seitlich am Hohlprofil 2 angeordnete Isolierelement 3 minimiert.

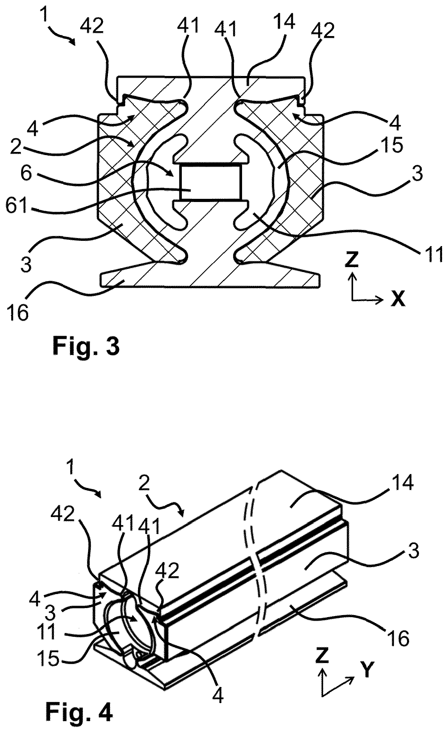

Fig. 3 und Fig. 4 zeigt die Aufnehmeranordnung 1 aus Fig. 1 und Fig. 2 vor dem Einbau in die Fahrbahn 9. Erfindungsgemäss ist das Isolierelement 3 formschlüssig mit dem Hohlprofil 2 verbunden. Dies hat den Vorteil, dass störende Rollkräfte weiterhin durch das Isolierelement 3 minimiert werden, während die Fertigungszeit gegenüber den mit dem Hohlprofil 2 verklebten Isolierelementen 3 aus dem Stand der Technik reduziert ist.

Die formschlüssige Verbindung ist erfindungsgemäß so ausgeführt, dass sie senkrecht zur Längsachse Y wirkt. Unter einer Wirkung der formschlüssigen Verbindung senkrecht zur Längsachse Y wird verstanden, dass das Isolierelement 3 gegenüber dem Hohlprofil 2 in allen Richtungen senkrecht zur Längsachse Y fixiert ist. Eine Fixierung des Isolierelements 3 in Richtung der Längsachse Y ist für den Einbau nicht notwendig. Die Aufnehmeranordnung 1 wird bei für den Einbau mit der Längsachse Y weitgehend vertikal zum Schwerefeld der Erde gehandhabt. Dadurch kann das Isolierelement 3 nicht begingt durch die Schwerkraft aus der formschlüssigen Verbindung rutschen, und das selbst dann nicht, wenn die Aufnehmeranordnung 1 um ihre Längsachse Y gedreht wird, beispielsweise beim Transport zur Nut in der Fahrbahn 9. Durch die Fixierung des Isolierelements 3 gegenüber dem Hohlprofil 2 in allen Richtungen senkrecht zur Längsachse Y ist daher das Isolierelement 3 zum Einbau der Aufnehmeranordnung 1 derart fixiert, dass das Isolierelement 3 sich nicht vom Hohlprofil 2 während des Einbaus lösen kann.

Erfindungsgemäß ist das Isolierelement 3 durch eine Haltevorrichtung 4 formschlüssig mit dem Hohlprofil 2 verbunden. Dafür weisst das Hohlprofil 2 mindestens eine Haltevorrichtung 4 auf, welche Haltevorrichtung 4 eingerichtet ist das Isolierelement 3 formschlüssig mit dem Hohlprofil 2 zu verbinden. Mögliche Ausführungsformen eines Hohlprofils 2 mit einer Haltevorrichtung 4 sind in den Fig. 1 bis Fig. 6 und Fig. 8 bis Fig. 9 dargestellt.

In der in den Fig. 1 bis Fig. 9 dargestellten Ausführungsformen ist die Haltevorrichtung 4 in einem Schnitt senkrecht zur Längsachse Y des Hohlprofils 2 u-förmig ausgebildet. Die u-Form der Haltevorrichtung 4 zeichnet sich durch zwei voneinander beabstandete Schenkel aus, welche Schenkel an einem Ende durch eine Basis verbunden sind und wobei die jeweils anderen Enden der Schenkel frei sind. Des Weiteren ist die U-Form derart ausgeführt, dass mindestens ein erster Abstand zwischen zwei Punkten auf unterschiedlichen Schenkeln grösser ist als ein zweite Abstand zwischen den freien Enden der Schenkel der u-Form; wobei erster Abstand und zweiter Abstand parallel zueinander sind. Das Isolierelement 3 weist entsprechend in einem Schnitt senkrecht zur Längsachse Y des Hohlprofils 2 im Bereiche zwischen den freien Schenkeln der U-Form eine geringere Ausdehnung auf als an der Ausdehnung zwischen den zwei Punkten auf unterschiedlichen Schenkeln, welche den erster Abstand definieren. Dadurch ist das Isolierelement 3 in der Ebene senkrecht zur Längsachse Y formschlüssig mit dem Hohlprofil 2 verbunden.

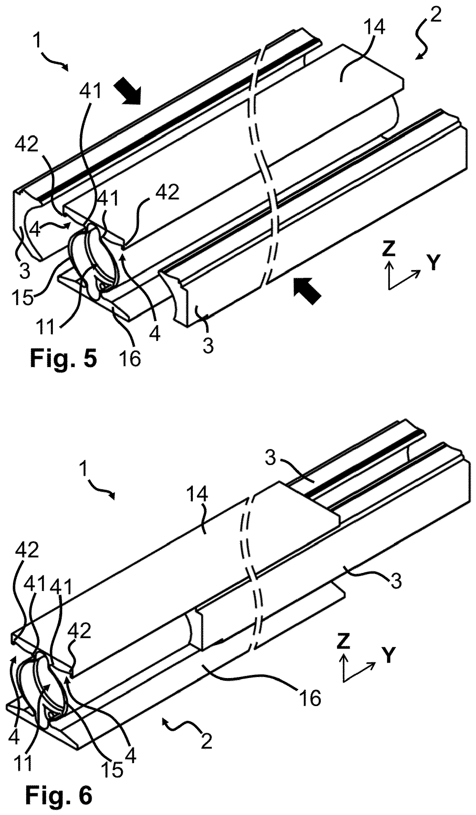

Erfindungsgemäß ist das Isolierelement 3 entlang der Längsachse Y in die Haltevorrichtung 4 einschiebbar, wie exemplarisch in Fig. 6 gezeigt. Dies ermöglicht eine schnelle und unkomplizierte Fixierung des Isolierelements 3 am Hohlprofil 2.

In einer bevorzugten Ausführungsform der Aufnehmeranordnung 1 sind mindestens zwei Isolierelemente 3 formschlüssig mit dem Hohlprofil 2 verbunden; wobei mindestens ein Isolierelement 3 an jeder Seite des Hohlprofils 2 bezüglich der Querrichtung formschlüssig mit dem Hohlprofil 2 verbunden ist. Eine Anordnung je mindestens eines Isolierelements 3 an jeder Seite des Hohlprofils 2 ist vorteilhaft, um Rollkräfte unabhängig von der Seite bezüglich der Querrichtung zu minimieren, von welcher Seite die Rollkräfte auf die Aufnehmeranordnung wirken.

Die Haltevorrichtung 4 besteht in einer Ausführungsform der Aufnehmeranordnung 1 aus einer Höhlung 41 zwischen Rohrteil 15 und Krafteinleitelement 14 und einem hakenförmigen Rückhalteelement 42. Die oben beschriebene u-Form der Haltevorrichtung 4 ist durch das hakenförmige Rückhalteelement, welches einen Schenkel der u-Form darstellt, durch das Krafteinleitelement 14, welches die Basis der u-Form darstellt, und durch die Höhlung 41 gegeben, in welcher Höhlung 41 ein Teilstück des Rohrteils 15 den zweiten Schenkel der u-Form darstellt. Das Isolierelement 3 ist zwischen Höhlung 41 und Rückhalteelement 42 formschlüssig fixierbar.

In einer weiteren Ausführungsform der Aufnehmeranordnung 1 besteht das Isolierelement 3 aus einem elastischen Material. Ein elastisches Material des Isolierelements 3 weist ein Elastizitätsmodul von weniger als ein Viertel des Elastizitätsmoduls des Materials des Hohlprofils 2 auf. Das Isolierelement 3 weisst im eingebautem Zustand der Aufnehmeranordnung 1 ein niedrigeres Elastizitätsmodul als die umgebende Vergussmasse 98 auf, damit ein Nebenkraftschluss durch die Vergussmasse 98 minimiert ist. Vorteilhaft ist es, wenn auch der Nebenkraftschluss durch das Isolierelement 3 möglichst gering gehalten ist. Da der Nebenkraftschluss durch das Rohrteil 15 des Hohlprofils 2 gut bestimmbar ist, ist ein geringer Nebenkraftschluss durch das Isolierelement 3 vorteilhaft für die Bestimmung des Teils des Kraftflusses durch die Aufnehmeranordnung 1 und damit für die Genauigkeit der Erfassung der Gewichtskraft durch die Aufnehmeranordnung 1.

In besonders vorteilhafter Ausführungsform der Aufnehmeranordnung 1 besteht das Isolierelement 3 aus einem elastischen Material mit einem Elastizitätsmodul von weniger als ein Zehntel des Elastizitätsmoduls des Materials des Hohlprofils 2.

In einer Ausführungsform der Aufnehmeranordnung 1 ist das Isolierelement 3 elastisch reversibel verformbar und in die Haltevorrichtung 4 eindrückbar. Dies ermöglicht eine schnelle und unkomplizierte Fixierung des Isolierelements 3 am Hohlprofil 2, wie schematisch in Fig. 5 gezeigt. Die beiden schwarzen Pfeile in Fig. 5 deuten dabei in die Richtung, in die das jeweilige Isolierelement 3 zum Eindrücken in die Haltevorrichtung 4 bewegt wird. Diese Fixierung ist alternativ zu der in Fig. 6 gezeigten Möglichkeit zur Fixierung des Isolierelements 3 mittels Einschieben in die Haltevorrichtung 4 zu verstehen. Das Isolierelement 3 wird seitlich gegen die Haltevorrichtung 4 gedrückt, wodurch es unter dem Krafteinfluss zu einer teilweisen Verformung des Isolierelements 3 kommt und das teilweise verformte Isolierelement 3 mit einem Teil des Isolierelements 3 in die Haltevorrichtung 4 einführbar ist. Ist das Isolierelement 3 mit dem entsprechenden Teil des Isolierelements 3 in die Haltevorrichtung 4 eingeführt, so kehrt das Isolierelement 3 in seine ursprüngliche Form zurück und ist so in der Haltevorrichtung 4 formschlüssig fixiert. Ein Isolierelement 3 kann geeignet sein für eine Fixierung mittels Einschieben und Mittels Eindrücken, sodass ein in die Haltevorrichtung 4 eindrückbares Isolierelement 3 auch in die Haltevorrichtung 4 einschiebbar ist.

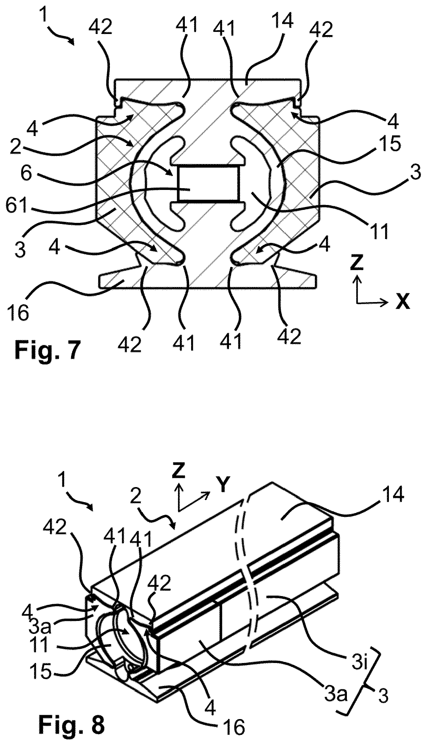

In einer Ausführungsform der Aufnehmeranordnung 1 weist das Hohlprofil 2 auf jeder Seite des Hohlprofils 2 bezüglich der Querachse X mindestens eine zweite Haltevorrichtung 4 auf, wie in Fig. 7 dargestellt. Die zweite Haltevorrichtung 4 kann ebenso wie die ursprüngliche Haltevorrichtung aus einer Höhlung 41 zwischen Rohrteil 15 und Krafteinleitelement 14 und einem hakenförmigen Rückhalteelement 42 bestehen. Ein Isolierelement 3 ist in dieser Ausführungsform durch mindestens zwei Haltevorrichtungen 4 fixiert. Dadurch ergibt sich eine verbesserte Fixierung des Isolierelements 3 gegenüber einem Hohlprofil 2 mit einer Haltevorrichtung je Seite des Hohlprofils 2 bezüglich der Querachse X.

In einer Ausführungsform der Aufnehmeranordnung 1 ist das Isolierelement 3 einstückig ausgeführt. Dies ist vorteilhaft bei Aufnehmeranordnungen 1 von bis zu 1000 mm Länge, da die Anzahl der Teile für die Montage geringe gehalten wird.

In einer Ausführungsform der Aufnehmeranordnung 1 ist das Isolierelement 3 aus mindestens zwei Isolierstücken 3a bis 3i, mit i=[b,...,z], zusammengefügt, wie in Fig. 8 dargestellt. Isolierstücke 3a bis 3i können unterschiedliche Dimensionen aufweisen. Isolierstücke 3a bis 3i können kraftschlüssig, formschlüssig oder stoffschlüssig untereinander zusammengefügt sein. Isolierstücke 3a bis 3i können auch nebeneinander bezüglich der Längsachse Y einzeln mit dem Hohlprofil 2 formschlüssig verbunden sein, ohne dass sie untereinander eine Verbindung eingehen. Dies ist vorteilhaft für eine Aufnehmeranordnung 1 ab 2000 mm Länge bezüglich der Längsachse Y, da das Isolierelement 3 bestehend aus mehreren Isolierstücken 3a bis 3i besser gehandhabt werden kann und dadurch die Montage trotz der höheren Anzahl von Teilen einfacher und schneller erfolgen kann.

Für Aufnehmeranordnungen 1 im Bereich zwischen 1000 mm und 2000 mm Länge ist eine einstückige oder eine aus mehreren Isolierstücken 3a bis 3i bestehendes Isolierelement 3 gleich vorteilhaft.

In einer bevorzugten Ausführungsform der Aufnehmeranordnung 1 besteht das Isolierelement 3 aus expandiertem Polyethylene oder aus expandiertem Polystyrol oder aus extrudiertem Polystyrol. Auch kann das Isolierelement 3 aus expandiertem Ethylen-Propylen-Dien-Kautschuk, expandiertem Silikon oder expandiertem Polypropylen oder ähnlichen Materialien ausgeführt sein. Diese Materialien erlauben eine kostengünstige Fertigung des Isolierelements 3. Zugleich ist das Material geeignet um einen Nebenkraftschluss durch die die Aufnehmeranordnung 1 umgebende Vergussmasse 98 zu minimieren. Auch weist das Material ein niedriges Elastizitätsmodul im Vergleich zur Vergussmasse 98 oder im Vergleich zu Metallen oder Metalllegierungen auf. Das Material ist zudem unter Krafteinfluss verformbar, wobei die Verformung mit Wegfall des Krafteinflusses reversibel ist. Dadurch ist das Material geeignet für ein Isolierelement 3, welches sowohl in die Haltevorrichtung 4 einschiebbar als auch eindrückbar ist, wie in Fig. 5 und Fig. 6 gezeigt.

In einer Ausführungsform der Aufnehmeranordnung 1 ist das Isolierelement 3 mit einem flächenhaften Klebefilm (nicht in den Figuren gezeigt) an der dem Hohlprofil zugewandten Seite bezüglich der Querachse X versehen Ist das Isolierelement 3 in die Haltevorrichtung 4 eingedrückt, so ist das Isolierelement 3 zusätzlich zur formschlüssigen Verbindung durch den Klebefilm stoffschlüssig mit dem Hohlprofil 2 verbunden. Dies verhindert ein verrutschen des formschlüssig in der Haltevorrichtung fixiertem Isolierelements 3 entlang der Längsachse Y, beispielsweise durch ein Anstossen des Isolierelements 3 an einen festen Gegenstand beim Bewegen der Ausnehmeranordnung 1 zum Einbau in der Fahrbahn 9.

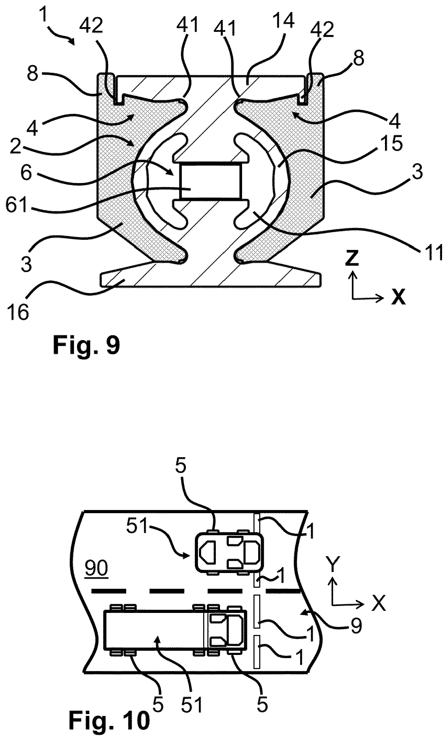

In einer Ausführungsform der Aufnehmeranordnung 1 sind Isolierelement 3 und Entkopplungsstreifen 8 einstückig ausgeführt, wie in Fig. 9 dargestellt. Dadurch entfällt ein Bauteil bei der Montage der Aufnehmeranordnung 1, wodurch die Montage einfacher, schneller und kostengünstiger ist. Der Entkopplungsstreifen ist in einem flexiblen Material ausgeführt, wie expandiertem Polyethylene, expandiertem Polystyrol, extrudiertem Polystyrol, expandiertem Ethylen-Propylen-Dien-Kautschuk, expandiertem Silikon, oder expandiertem Polypropylen.

In einer Ausführungsform ist die Kraftsensoranordnung 6 im mechanischen Kontakt mit dem Hohlprofil 2 im Hohlprofil 15 elastisch vorgespannt angeordnet. Dies hat den Vorteil eines gut definierten mechanischen Kontaktes zwischen Hohlprofil 2 und Kraftsensoranordnung 6. Ist der mechanischen Kontaktes zwischen Hohlprofil 2 und Kraftsensoranordnung 6 nicht gut definiert, existieren beispielsweise Spalte zwischen Hohlprofil 2 und Kraftsensoranordnung 6, so wird eine auf das Krafteinleitelement 14 wirkende Kraft am Ort des Spaltes unzureichend auf die Kraftsensoranordnung 6 geleitet. Dies führt zu einer unvorteilhaften und ungenauen Bestimmung der auf die Aufnehmeranordnung 1 wirkenden Kraft. Ein gut definierter mechanischen Kontaktes zwischen Hohlprofil 2 und Kraftsensoranordnung 6 durch eine elastische Vorspannung der Kraftsensoranordnung 6 ist daher vorteilhaft und erhöht die Genauigkeit der Erfassung der auf die Aufnehmeranordnung 1 wirkende Kraft gegenüber einer Aufnehmeranordnung 1, in welcher die Kraftsensoranordnung 6 nicht vorgespannt im Hohlprofil 2 angeordnet ist.

In einer bevorzugten Ausführungsform weist die Kraftsensoranordnung 6 mindestens zwei entlang der Längsachse Y beabstandete Kraftsensoren 61 auf. In dieser Ausführungsform ist der Kraftsensor 61 ein piezoelektrischer Kraftsensor 61. Ein piezoelektrischer Kraftsensor 61 ist geeignet dynamische Kräfte mit Erfassungsfrequenzen mindestens mehreren Kilohertz (kHz) zu erfassen. Die Erfassungsfrequenz beschreibt wie oft pro Zeiteinheit ein Wert für die Gewichtskraft erfasse werden kann. Die Erfassungsfrequenz von mindestens mehreren Kilohertz erlaubt die Erfassung von Gewichtskräften von Fahrzeugen, welche mit einer Geschwindigkeit von 100 km/h und mehr eine Aufnehmeranordnung mit einer Ausdehnung von beispielsweise 25 mm überfahren. Um eine gute Erfassung der Gewichtskraft zu gewähren, muss die Erfassungsfrequenz geeignet sein mehr als 4 Werte für die Gewichtskraft zu erfassen während das Rad des Fahrzeugs die Aufnehmeranordnung überfährt. Dies ist mit piezoelektrischen Kraftsensoren ermöglicht.

Die piezoelektrischen Kraftsensoren 61 sind entlang der Längsachse Y beabstandet angeordnet, wodurch die Kraftsensoranordnung 6 eingerichtet ist eine an einem Punkt entlang der Längsachse Y der Aufnehmeranordnung 1 auf das Krafteinleitelement 14 wirkende Kraft zu erfassen. Vorteilhafterweise beträgt der Abstand zwischen beabstandeten piezoelektrischen Kraftsensoren 61 zwischen 20 mm und 500 mm, bevorzugt zwischen 40 mm und 100 mm.

Es ist natürlich auch möglich eine Aufnehmeranordnung 1 zu verwenden, in der die Kraftsensoranordnung 6 mindestens einen Kraftsensor 61 aufweist; welcher Kraftsensor 61 ein entlang der Längsachse Y angeordneter Lichtleiter ist. Die Nutzung eines Lichtleiters zur Erfassung einer Kraft ist dem Fachmann bekannt. Vom Lichtleiter geleitete elektromagnetische Strahlung wird durch eine Krafteinwirkung auf den Lichtleiter verändert. Diese Veränderung ist ein Mass für die wirkende Kraft. Als Lichtleiter wird auch ein Leiter für nicht sichtbare elektromagnetische Strahlung verstanden, beispielsweise ein Leiter für Infrarotstrahlung oder Ultraviolettstrahlung.

Es ist natürlich auch möglich einen kapazitiven Kraftsensor 61 oder einen Dehnungsmessstreifen 61 oder einen piezoresistiven Kraftsensor 61 zur Anordnung in der Kraftsensoranordnung 6 vorzusehen. Diese können lang entlang der Längsachse Y ausgestaltet sein oder als diskrete Kraftsensoren 61 beabstandet voneinander angeordnet sein. Vorteilhafterweise beträgt der Abstand zwischen beabstandeten kapazitiven Kraftsensoren 61 oder Dehnungsmessstreifen 61 oder piezoresistiven Kraftsensoren 61 zwischen 20 mm und 500 mm, bevorzugt zwischen 40 mm und 100 mm.

Vorzugsweise ist das Hohlprofil 2 aus einem Metall oder einer Metalllegierung ausgeführt, beispielsweise Aluminium, Eisen, Titan, Kupfer, Stahl, Edelstahl, Aluminiumlegierungen, Messing oder ähnlichen Metallen oder Metalllegierungen. Diese weisen eine gute mechanische Beständigkeit in der Verwendung der Aufnehmervorrichtung in der Fahrbahn 9 auf. Sie verfügen zudem über Materialeigenschaften die geeignet sind die Kraftsensoranordnung 6 vorgespannt im Hohlprofil 2 anzuordnen. Zudem ist durch die Materialwahl gewährleistet, dass die Vorspannung über einen langen Zeitraum von mehreren Jahren aufrechterhalten bleibt.

Bevorzugt wird die Aufnehmervorrichtung zur Ermittlung einer Gewichtskraft mindestens eines Rades 5 eines bewegten Fahrzeuges 51 verwendet, welches Rad 5 mit der Fahrbahn 9 im direkten Kontakt ist.

Selbstverständlich sind die Merkmale verschiedener Ausführungsformen kombinierbar. Neue Ausführungsformen, welche eine Kombination zweier oder mehr Merkmalen der oben beschriebenen Ausführungsformen beinhalten sind selbstverständlich ebenso geeignet zur Lösung der gestellten Aufgabe.

### Bezugszeichenliste

- 1: Aufnehmeranordnung
- 2: Hohlprofil
- 3: Isolierelement
- 3a, 3i: Isolierstück
- 4: Haltevorrichtung
- 5: Rad
- 6: Kraftsensoranordnung
- 7: Rollkraft
- 8: Entkopplungsstreifen
- 9: Fahrbahn
- 11: Hohlraum
- 14: Krafteinleitelement
- 15: Rohrteil
- 16: Verankerungselement
- 41: Höhlung
- 42: Rückhalteelement
- 51: Fahrzeug
- 61: Kraftsensor
- 90: Fahrbahnoberfläche
- 98: Vergussmasse
- 99: Vergussmasse
- X: Querachse
- Y: Längsachse
- Z: Vertikalachse

## Patentansprüche

1. Aufnehmeranordnung (1) zum Einbringen in eine Fahrbahn (9); welche Aufnehmeranordnung (1) ein entlang einer Längsachse (Y) ausgebildetes Hohlprofil (2), eine Kraftsensoranordnung (6) und mindestens ein aussenseitig am Hohlprofil (2) angeordnetes Isolierelement (3) aufweist; welches Isolierelement die Aufnehmeranordnung im eingebauten Zustand gegen eine seitlich wirkende Rollkraft (7) isoliert; wobei das Hohlprofil (2) einen Hohlraum (11) aufweist und die Kraftsensoranordnung (6) im Hohlraum (11) angeordnet ist; welche Kraftsensoranordnung (6) im eingebauten Zustand der Aufnehmeranordnung (1) eingerichtet ist eine auf das Hohlprofil (2) ausgeübte Gewichtskraft zu erfassen; wobei das Isolierelement (3) formschlüssig mit dem Hohlprofil (2) verbunden ist; wobei das Hohlprofil (2) mindestens eine Haltevorrichtung (4) aufweist, welche Haltevorrichtung (4) eingerichtet ist das Isolierelement (3) formschlüssig mit dem Hohlprofil (2) zu verbinden; wobei die formschlüssige Verbindung senkrecht zur Längsachse (Y) wirkt, sodass das Isolierelement (3) gegenüber dem Hohlprofil (2) in allen Richtungen senkrecht zur Längsachse (Y) fixiert ist; **dadurch gekennzeichnet, dass** das Isolierelement (3) entlang der Längsachse (Y) in die Haltevorrichtung (4) einschiebbar ist.

2. Aufnehmeranordnung (1) nach Anspruch 1, **dadurch gekennzeichnet, dass** mindestens zwei Isolierelemente (3) formschlüssig mit dem Hohlprofil (2) verbunden sind; wobei mindestens ein Isolierelement (3) an jeder Seite des Hohlprofils (2) bezüglich der Querrichtung formschlüssig mit dem Hohlprofil (2) verbunden ist.

3. Aufnehmeranordnung (1) nach einem der Ansprüche 1 bis 2; wobei das Hohlprofil (2) ein plattenförmiges Krafteinleitelement (14) aufweist; welches Hohlprofil (2) ein Rohrteil (15) aufweist, welches Rohrteil (15) zwischen dem Krafteinleitelement (14) und dem Verankerungselement (16) angeordnet ist; welches Rohrteil (15) den Hohlraum (11) umschliesst; welches Verankerungselement (16) und welches Rohrteil (15) und welches Krafteinleitelement (14) einstückig ausgeführt sind; welches Rohrteil (15) mit dem Krafteinleitelement (14) und mit dem Verankerungselement (16) einstückig verbunden ist; **dadurch gekennzeichnet, dass** die Haltevorrichtung (4) aus einer Höhlung (41) zwischen Rohrteil (15) und Krafteinleitelement (14) und einem hakenförmigen Rückhalteelement (42) besteht, zwischen welcher Höhlung (41) und Rückhalteelement (42) das Isolierelement formschlüssig fixierbar ist.

4. Aufnehmeranordnung (1) nach Anspruch 3; wobei neben dem Krafteinleitelement (14) bezüglich der Querachse (X) mindestens ein Entkopplungstreifen (8) angeordnet ist; welcher Entkopplungstreifen (8) sich über die Länge des Isolierelements (3) entlang der Längsachse (Y) erstreckt und sich in Vertikalrichtung (Z) vom Isolierelement (3) aus den Krafteinleitelement (14) seitlich berührend bis zur Fahrbahnoberfläche (90) erstreckt; **dadurch gekennzeichnet, dass** das Isolierelement (3) und der Entkopplungsstreifen (8) einstückig ausgeführt sind.

5. Aufnehmeranordnung (1) nach einem der Ansprüche 1 bis 4, **dadurch gekennzeichnet, dass** das Isolierelement (3) aus einem elastischen Material besteht; wobei ein elastisches Material des Isolierelements (3) ein Elastizitätsmodul von weniger als ein Viertel, vorteilhafterweise weniger als einem Zehntel, des Elastizitätsmoduls des Materials des Hohlprofils (2) aufweist.

6. Aufnehmeranordnung (1) nach Anspruch 5, **dadurch gekennzeichnet, dass** das Isolierelement (3) elastisch reversibel verformbar ist und in die Haltevorrichtung (4) eindrückbar ist.

7. Aufnehmeranordnung (1) nach einem der Ansprüche 1 bis 6, **dadurch gekennzeichnet, dass** die Kraftsensoranordnung (6) im mechanischen Kontakt mit dem Hohlprofil (2) im Hohlprofil (2) elastisch vorgespannt angeordnet ist.

8. Aufnehmeranordnung (1) nach einem der Ansprüche 1 bis 7, **dadurch gekennzeichnet, dass** das Hohlprofil (2) aus einem Metall oder einer Metalllegierung ausgeführt ist; und das das Hohlprofil (2) beiderseits bezüglich der Querachse (X) mindestens zwei Haltevorrichtungen (4) aufweist.

9. Aufnehmeranordnung (1) nach einem der vorhergehenden Ansprüche, **dadurch gekennzeichnet, dass** das Isolierelement (3) aus expandiertem Polyethylene oder aus expandiertem Polystyrol oder aus extrudiertem Polystyrol oder aus expandiertem Ethylen-Propylen-Dien-Kautschuk oder aus expandiertem Silikon oder aus expandiertem Polypropylen besteht.

10. Aufnehmeranordnung (1) nach einem der vorgehenden Ansprüche, **dadurch gekennzeichnet, dass** die Kraftsensoranordnung (6) mindestens zwei entlang der Längsachse (Y) beabstandete Kraftsensoren (61) aufweist; und dass der Kraftsensor (61) ein piezoelektrischer Kraftsensor (61) ist.

11. Aufnehmeranordnung (1) nach einem der vorgehenden Ansprüche, **dadurch gekennzeichnet, dass** das Isolierelement 3 aus mindestens zwei Isolierstücken (3a bis 3i) zusammengefügt ist.

12. Verwendung einer Aufnehmervorrichtung nach einem der vorgehenden Ansprüche zur Ermittlung einer Gewichtskraft mindestens eines Rades (5) eines bewegten Fahrzeuges (51), welches Rad (5) mit der Fahrbahn (9) im direkten Kontakt ist.

## Claims

1. A transducer assembly (1) for mounting in a roadway (9); which transducer assembly (1) comprises a hollow profile (2) extending along a longitudinal axis (Y), a force sensor assembly (6) and at least one insulating element (3) arranged on the outside of the hollow profile (2); which insulating element insulates the transducer assembly after mounting from a rolling force (7) acting on the sides thereof; wherein said hollow profile (2) comprises a cavity (11) and said force sensor assembly (6) is arranged in the cavity (11); wherein after mounting the force sensor assembly (6) of the transducer assembly (1) is configured to detect a weight force exerted onto the hollow profile (2); wherein the insulating element (3) is secured to the hollow profile (2) by a positive fit connection; wherein the hollow profile (2) comprises at least one holding means (4), which holding means (4) is configured to establish a positive fit connection between the insulating element (3) and the hollow profile (2); wherein the positive fit connection is effective in a direction perpendicular to the longitudinal axis (Y) so that the insulating element (3) is fixed relative to the hollow profile (2) in all directions perpendicular to the longitudinal axis (Y); **characterized in that** the insulating element (3) can be inserted in the holding means (4) by sliding it along the longitudinal axis (Y).

2. The transducer assembly (1) according to claim 1, **characterized in that** at least two insulating elements (3) are secured to the hollow profile (2) by a positive fit connection; wherein on each side of the hollow profile (2) with respect to the transverse direction at least one insulating element (3) is positive fit to the hollow profile (2).

3. The transducer assembly (1) according to any of the claims 1 to 2; wherein said hollow profile (2) comprises a plateshaped force introduction element (14); said hollow profile (2) comprises a tubular portion (15), said tubular portion (15) being arranged between said force introduction element (14) and said anchoring element (16); which tubular portion (15) encloses the cavity (11); which anchoring element (16) and which tubular portion (15) and which force introduction element (14) are made in one piece; which tubular portion (15) is integrally connected to the force introduction element (14) and to the anchoring element (16); **characterized in that** the holding means (4) consists of a recess (41) between the tubular portion (15) and force introduction element (14) and a hook-shaped retaining element (42), wherein the insulating element can be secured between said recess (41) and retaining element (42) by a positive fit connection.

4. The transducer assembly (1) according to claim 3; wherein at least one decoupling strip (8) is arranged next to the force introduction element (14) with respect to the transverse axis (X); which decoupling strip (8) extends over the length of the insulating element (3) along the longitudinal axis (Y) and extends in the vertical direction (Z) from the insulating element (3), laterally contacting the force introduction element (14), up to the roadway surface (90); **characterized in that** the insulating element (3) and the decoupling strip (8) are made in one piece.

5. The transducer assembly (1) according to any of the claims 1 to 4, **characterized in that** the insulating element (3) is made of an elastic material; wherein an elastic material of the insulating element (3) has a modulus of elasticity that is 4 times lower, advantageously 10 times lower, than the modulus of elasticity of the material of the hollow profile (2).

6. The transducer assembly (1) according to claim 5, **characterized in that** the insulating element (3) is elastically deformable in a reversible manner and can be pressed into the holding means (4).

7. The transducer assembly (1) according to any of the claims 1 to 6, **characterized in that** the force sensor assembly (6) is arranged elastically preloaded in the hollow profile (2) in mechanical contact with the hollow profile (2) .

8. The transducer assembly (1) according to any of the claims 1 to 7, **characterized in that** the hollow profile (2) is made of a metal or a metal alloy; and **in that** the hollow profile (2) comprises at least two holding means (4) arranged on both sides thereof with respect to the transverse axis (X).

9. The transducer assembly (1) according to any of the preceding claims, **characterized in that** the insulating element (3) is made of expanded polyethylene or expanded polystyrene or extruded polystyrene or expanded ethylenepropylene-diene rubber or expanded silicone or expanded polypropylene.

10. The transducer assembly (1) according to any of the preceding claims, **characterized in that** the force sensor assembly (6) comprises at least two force sensors (61) spaced-apart along the longitudinal axis (Y); and **in that** the force sensor (61) is a piezoelectric force sensor (61) .

11. The transducer assembly (1) according to any of the preceding claims, **characterized in that** the insulating element 3 is assembled from at least two insulating pieces (3a to 3i).

12. Use of a transducer device according to any of the preceding claims for determining a weight force of at least one wheel (5) of a moving vehicle (51), which wheel (5) is in direct contact with the roadway (9).

## Revendications

1. Ensemble transducteur (1) destiné pour être installé dans une chaussée (9) ; ledit ensemble transducteur (1) comprenant un profilé creux (2) s'étendant le long d'un axe longitudinal (Y), un ensemble capteur de force (6) et au moins un élément isolant (3) disposé à l'extérieur du profilé creux (2) ; dans lequel l'élément isolant isole l'ensemble transducteur après montage de celui-ci d'une force de roulement (7) agissant latéralement ; dans lequel ledit profilé creux (2) comprend une cavité (11) et ledit ensemble capteur de force (6) est disposé dans ladite cavité (11) ; dans lequel l'ensemble capteur de force (6) de l'ensemble transducteur (1) après montage de celui-ci est configuré pour détecter une force de poids exercée sur le profilé creux (2) ; dans lequel l'élément isolant (3) est lié au profilé creux (2) par une liaison par correspondance de formes; dans lequel le profilé creux (2) comporte au moins un dispositif de support (4), lequel dispositif de support (4) est configuré pour établir une liaison par correspondance de formes entre l'élément isolant (3) et le profilé creux (2); dans lequel la liaison par correspondance de formes est effective dans une direction perpendiculaire à l'axe longitudinal (Y) de sorte que l'élément isolant (3) est fixe par rapport au profilé creux (2) dans toutes les directions perpendiculaires à l'axe longitudinal (Y); **caractérisé en ce que** l'élément isolant (3) peut être inséré dans le dispositif de support (4) en le faisant glisser le long de l'axe longitudinal (Y).

2. Ensemble transducteur (1) selon la revendication 1, **caractérisé en ce qu'**au moins deux éléments isolants (3) sont liés au profilé creux (2) par des liaisons par correspondance de formes ; dans lequel de chaque côté du profilé creux (2) par rapport à la direction transversale au moins un élément isolant (3) est lié au profilé creux (2) par correspondance de formes.

3. Ensemble transducteur (1) selon l'une quelconque des revendications 1 à 2 ; dans lequel ledit profilé creux (2) comprend un élément d'introduction de force (14) en forme de plaque ; ledit profilé creux (2) comprend une partie tubulaire (15), ladite partie tubulaire (15) étant disposée entre ledit élément d'introduction de force (14) et l'élément d'ancrage (16) ; dans lequel ladite partie tubulaire (15) entoure la cavité (11) ; ledit élément d'ancrage (16) et ladite partie tubulaire (15) et ledit élément d'introduction de force (14) sont fabriqués d'une seule pièce ; dans lequel ladite partie tubulaire (15) est intégralement reliée à l'élément d'introduction de force (14) et à l'élément d'ancrage (16) ; **caractérisé en ce que** le dispositif de support (4) consiste en un renfoncement (41) entre la partie tubulaire (15) et l'élément d'introduction de force (14) et un élément de retenue en forme de crochet (42), dans lequel l'élément isolant peut être fixé entre ledit renfoncement (41) et l'élément de retenue (42) par une liaison par correspondance de formes.

4. Ensemble transducteur (1) selon la revendication 3, dans lequel à coté de l'élément d'introduction de force (14), par rapport à l'axe transversal (X), est disposée au moins une bande de découplage (8) ; dans lequel ladite bande de découplage (8) s'étend sur la longueur de l'élément isolant (3) le long de l'axe longitudinal (Y) et s'étend dans la direction verticale (Z) à partir de l'élément isolant (3) en contact latéral avec l'élément d'introduction de force (14) jusqu'à la surface de la chaussée (90) ; **caractérisé en ce que** l'élément isolant (3) et la bande de découplage (8) sont faits d'une seule pièce.

5. Ensemble transducteur (1) selon l'une quelconque des revendications 1 à 4, **caractérisé en ce que** l'élément isolant (3) est composé d'un matériau élastique ; dans lequel un matériau élastique de l'élément isolant (3) a un module d'élasticité qui est inférieur d'un quart, avantageusement inférieur d'un dixième, au module d'élasticité du matériau du profilé creux (2).

6. Ensemble transducteur (1) selon la revendication 5, **caractérisé en ce que** l'élément isolant (3) est susceptible de subir une déformation plastique réversible et peut être enfoncé dans le dispositif de support (4).

7. Ensemble transducteur (1) selon l'une quelconque des revendications 1 à 6, **caractérisé en ce que** l'ensemble capteur de force (6) est disposé dans le profilé creux (2) et précontraint élastiquement en contact mécanique avec le profilé creux (2).

8. Ensemble transducteur (1) selon l'une quelconque des revendications 1 à 7, **caractérisé en ce que** le profilé creux (2) est fabriqué d'un métal ou d'un alliage métallique ; et **en ce que** le profilé creux (2) comprend au moins deux dispositifs de support (4) disposés de part et d'autre de celui-ci par rapport à l'axe transversal (X).

9. Ensemble transducteur (1) selon l'une quelconque des revendications précédentes, **caractérisé en ce que** l'élément isolant (3) est en polyéthylène expansé ou en polystyrène expansé ou en polystyrène extrudé ou en caoutchouc éthylène-propylène-diène expansé ou en silicone expansé ou en polypropylène expansé.

10. Ensemble transducteur (1) selon l'une quelconque des revendications précédentes, **caractérisé en ce que** l'ensemble capteur de force (6) comprend au moins deux capteurs de force (61) espacés l'un de l'autre le long de l'axe longitudinal (Y) ; et **en ce que** ledit capteur de force (61) est un capteur de force (61) piézoélectrique.

11. Ensemble transducteur (1) selon l'une quelconque des revendications précédentes, **caractérisé en ce que** l'élément isolant 3 est assemblé à partir d'au moins deux pièces isolantes (3a à 3i).

12. Utilisation d'un dispositif transducteur selon l'une quelconque des revendications précédentes pour détecter une force de poids d'au moins une roue (5) d'un véhicule (51) en mouvement dans lequel ladite roue (5) est en contact direct avec la chaussée (9).
